# EUROPÄISCHE PATENTSCHRIFT

(11) **EP 0 356 536 B1**
(45) Veröffentlichungstag und Bekanntmachung des Hinweises auf die Patenterteilung: **05.01.1994**
(21) Anmeldenummer: 88113998.4
(22) Anmeldetag: 27.08.1988
(51) Int. Cl.: F16K 31/08

(54) **Durch elektrische Impulse gesteuertes, bistabiles auf-/zu Ventil für Flüssigkeiten**
Bistable on/off valve for fluids, actuated by electric pulses
Clapet bistable d'ouverture et de fermeture pour fluides, commandé par des impulsions électriques

(43) Veröffentlichungstag der Anmeldung: 07.03.1990
(73) Patentinhaber: MPE Produkt Plan AG, CH-8048 Zürich (CH)
(72) Erfinder: Feier, Markus, CH-8112 Otelfingen (CH); Girsberger, Arthur, CH-8152 Opfikon (CH)

(56) Entgegenhaltungen:
- CH-A- 488 131
- DE-A- 1 963 745
- GB-A- 982 832
- US-A- 3 420 492

## Beschreibung

Die Erfindung bezieht sich auf ein durch elektrische Impulse gesteuertes, bistabiles Auf-Zu-Ventil für Flüssigkeiten, das mit möglichst geringem Energieaufwand betrieben werden kann und während langer Zeit betriebssicher arbeitet. Zum Durchlassen und Sperren von strömenden Flüssigkeiten in Leitungen werden oft durch elektrische Impulse gesteuerte, bistabile Auf-Zu-Ventile angewendet und zwar insbesondere dann, wenn die Steuerung des Ventils mit kleinstmöglichem elektrischen Energieaufwand erfolgen muss. Es sind Lösungen bekannt, bei denen beispielsweise ein impulsgesteuertes, bistabiles elektromagnetisches Steuersystem über ein Vorsteuerventil mit geringem Energieaufwand das Hauptventil betätigt. Ein solches bistabiles Vorsteuerventil benötigt nur während des Auf-Zu-Umschaltvorganges und umgekehrt elektrische Energie. Dem Vorsteuerventil fällt dabei die Aufgabe zu, die Betätigung des Hauptventiles auszulösen, wobei dann der grösste Teil der dazu benötigten Energie aus dem Druckgefälle der Flüssigkeit am Hauptventil stammt. Bei hochempfindlichen, mit geringer elektrischer Energie impulsgesteuerter Ventile war bisher jedoch praktisch unvermeidbar, dass im Flüssigkeitsstrom chemisch gelöste oder als Kontamination vorhandene Bestandteile das zuverlässige Langzeitfunktionieren des Vorsteuermechanismus durch Korrosion und oder Ablagerungen vor allem im Luftspalt des magnetischen Kreises störten oder sogar gänzlich verhinderten.
Ein gattungsgemässes bistabiles Ventil ist in der US-A-3 420 492 beschrieben. Bei diesem Ventil ist die mögliche Anwendung einer elastischen Membran vorgesehen, welche die Steuerkammer von der Ventilkammer trennt. In der Membran sind mehrere relativ kleine Oeffnungen angeordnet die den Druckausgleich in den beiden Kammern gewährleisten. Diese als Teilchenfilter wirkende Membran soll verhindern, dass unerwünschte Partikel in die Steuerkammer gelangen und den Steuermechanismus in seiner Funktion beeinträchtigen. Die oben erwähnten Einflüsse durch chemisch gelöste oder als Kontamination vorhandene Bestandteile mit Partikeln kleiner als die Membranöffnungen sind jedoch unvermeidbar.
Die vorliegende Erfindung löst das Problem, ein elektrisch gesteuertes Ventil mit kleinstmöglichem elektrischen Energieaufwand zu betreiben, wobei eine Beeinträchtigung des Steuermechanismus durch im Flüssigkeitsstrom enthaltene Substanzen und oder Kontaminationen gegenüber bekannten Ventilen dieser Art um Grössenordnungen verzögert wird, sodass sogar ein langjähriger störungsfreier Betrieb eines derartigen Ventiles erreicht werden kann, wobei bis zu einer oberen hydraulischen Leistungsgrenze (Druck, Durchsatz, Ventilgrösse und Oeffnungsquerschnitt) sogar die Möglichkeit besteht, das Ventil mit relativ geringer elektrischer Energie direkt, d.h. ohne Vorsteuerstufe zu betreiben.
Die Erfindung ist dadurch gekennzeichnet, dass die Magnetpole (13,14) des Steuermechanismus und der mit diesem zusammenwirkende Magnetanker (15) in einer mit einem flüssigen oder gasförmigen Medium gefüllten Steuerkammer (3) angeordnet sind, welche durch die elastische Membran (1) von einer vom zu steuernden Flüssigkeitsstrom durchflossenen Ventilkammer (4) getrennt ist, und dass die Steuerkammer (3) und die Ventilkammer (4) durch eine Druckausgleichsleitung (5) verbunden sind.
Ein Ausführungsbeispiel eines erfindungsgemässen Ventils wird nachfolgend anhand einer Prinzipdarstellung gemäss beiliegender Figur erläutert. Die Ventileinheit zum Sperren und Durchlassen eines Flüssigkeitsstromes weist im wesentlichen das Auf-Zu-Ventil (10) mit einem elektromagnetischen Steuerteil (12) auf. Das in der Ventilkammer (4) des Ventilgehäuses (16) angeordnete Ventil (10) ist durch die Membran (1) von den in der Steuerkammer (3) angeordneten Magnetpolen (13,14) mit Anker (15) flüssigkeits- bezw. gasdicht getrennt. Die Membran (1) ist mit ihrem Umfangsrand in der Wand (20) des Gehäuses (16) festgelegt. Sie ist in einem Ringbereich (17) der Walkzone elastisch und in ihrem Zentralbereich der Stützzone mit dem die Ventilklappe (6) haltenden Element (2) verbunden. Der Ventilklappe (6) wird durch eine Feder (19) gegen den Ventilsitz gedrückt. Wenn die Ventilklappe (6) auf dem Ventilsitz (18) aufliegt, ist das Ventil geschlossen und es findet keine Flüssigkeitsströmung vom Einlass E zum Auslass A statt.
Das Steuerteil weist ein bistabiles elektromagnetisches System auf, das durch elektrische Steuerimpulse beaufschlagt wird. Vom bistabilen Magnetsystem (12) wird ein mit der Ventilklappe (10) verbundenes mechanisches Element (2) über einen an ihm befestigten Anker (15) derart bewegt, dass das Ventil (10) entweder geschlossen oder geöffnet wird. Befindet sich das Element (2) in seiner unteren Stellung, so wird das Ventil (10) geschlossen; befindet sich das Element (2) mit dem Anker (15) in seiner oberen Stellung, so ist das Ventil geöffnet. Damit das Magnetsystem möglichst wenig Energie und dies lediglich zum Schalten aufnehmen muss, nicht aber zum Halten des Elementes (2) in den beiden Endstellungen, ist das Element (2) mit einer Feder (19) verbunden, die an ihrem dem Element (2) entgegengesetzten Ende auf einer Halterung (8) festgelegt ist. Die Feder (19) hat die Aufgabe, das Ventil (10) im geschlossenen Zustand mit einer genügenden Kraft an den Ventilsitz zu drücken und damit dicht zu halten. Die Feder (19) kann auch als Schnappfeder ausgebildet sein, mit zwei bistabilen Stellungen, die der Oeffnungs- bezw. der Schliessstellung des Ventils (10) entsprechen. Wenn das Ventil (10) in einer seiner beiden Stellungen, entweder der Schliess- oder der Oeffnungsstellung ist und in dieser Stellung durch die Schnappfeder (19) gehalten wird, muss das Magnetsystem (12) jeweils lediglich zum Umschalten die Haltekraft der Feder (19) überwinden. Tut das Magnetsystem das, so schnappt die Feder (19) in ihre andere bistabile Stellung um und bringt das Ventil in seine andere Stellung, also von der Oeffnungs- in die Schliessstellung oder aber von der Schliess- in die Oeffnungsstellung.
Dadurch, dass die Haltefunktion des Ventils in beiden Stellungen entweder durch Hilfsfedern oder Schnappfedern gewährleistet ist, benötigt das Magnetschaltglied (12) lediglich Energie zum Umschalten, nicht aber zum Halten des Ventils in der Auf- oder Zu-Stellung.
Das Magnetschaltglied (12) weist einen magnetischen Kreis mit einem U-förmigen Joch (21) und einem beweglichen Anker (15) auf, der mit dem Element (2) verbunden ist. Der Steg des Joches (21) ist von der Erregerspule (22) umgeben, während insbesondere das Joch (21) aus weichmagnetischem Werkstoff besteht, ist zwischen den Schenkeln des Jochs (21) ein Permanentmagnet (23) angeordnet. Die magnetischen Feld- und Kraftverhältnisse sind dabei derart getroffen, dass der Permanentmagnet (23) über die beiden Schenkel des Jochs und nicht eingeschalteter Erregerspule (22) den Anker (15) mit dem Element (2) in der gestrichelt gezeichneten Stellung sicher hält, jedoch nicht mehr aus der durchgehend gezeichneten Stellung anzieht.
Wird nun ein dem durch den Permanentmagneten (23) über den Anker (15) gebildeten magnetischen Kreis entgegenwirkendes Magnetfeld durch Einschalten der Erregerspule eingeschaltet, das als Verdrängerfeld gegenüber dem Feld des Permanentmagneten wirkt, so fällt der Anker (15) zumindest vom Joch (21) ab, wobei bei einer Ausgestaltung mit Hilfsfeder das Verdrängerfeld das Permanentmagnetfeld soweit überwinden kann, dass die Hilfsfeder (19) in ihre der Schliessstellung des Ventils entsprechende Stellung gedrückt wird.
Wird ein das Permanent-Magnetfeld verstärkendes Feld durch Einschalten der Erregerspule (22) eingeschaltet, so wird der Anker aus der gestrichelt dargestellten Schliessstellung in die durchgezeichnet dargestellte Oeffnungsstellung gezogen und dabei ggf. die Kraft der Schnapp- oder herkömmlichen Feder überwunden und der Anker auf jeden Fall bei ausgeschalteter Erregerspule (22) in seiner oberen, gestrichelt gezeichneten Stellung gehalten.
Um die erforderliche Energie zum betätigen des Ventildeckels (6) auf ein Minimum zu beschränken, wird gemäss Anspruch 1 die durch den Differenzdruck zwischen Steuer- und Ventilkammer (3,4) erzeugte Kraft auf die Membran, welche durch das Magnetsystem überwunden werden müsste vermieden, indem mittels einer Druckausgleichsleitung (5) zwischen den beiden Kammern (3,4) der Druck ausgeglichen wird.

Die Steuerkammer (3) kann je nach den spezifizierten Druckverhältnissen in der Ventilkammer (4) mit einem Gas, insbesondere mit Luft oder aber mit einer Flüssigkeit gefüllt sein. Diese kann in bestimmten Fällen mit derjenigen der Ventilkammer (4) identisch sein, nämlich wenn keine schädliche mechanischen (Ablagerungen) und oder chemische (Korrosion) Einwirkungen auf das Steuersystem zu befürchten sind. Ist letzteres nicht der Fall, so können, obwohl in der Steuerkammer (3) keine Flüssigkeitsströmung entsteht, schädliche Bestandteile der in der Ventilkammer (4) strömenden Flüssigkeit durch Diffusion in die Steuerkammer (3) gelangen und sich am Anker (15) und an den Polschuhen (13,14) festsetzen und das Funktionieren des Steuersystems behindern. Um letzteres zu vermeiden, ist gemäss Anspruch 2 die Steuerkammer (3) mit einer Flüssigkeit gefüllt, welche sich mit derjenigen der Ventilkammer (4) nicht vermischt.

Eine weitere Verbesserung wird gemäss Anspruch 3 dadurch erreicht, dass sich in der Druckausgleichsleitung (5) ein Abschnitt (7) einer weiteren Flüssigkeit befindet, die sich mit den beiden in der Ventil- bezw. Steuerkammer befindlichen Flüssigkeiten nicht vermischt.
Eine weitere Massnahme zum Schutz des Magnetkreisluftspaltes besteht gemäss Anspruch 4 darin, dass sich in der Druckausgleichsleitung (5) eine Gasblase, beispielsweise eine Luftblase befindet, welche die Flüssigkeiten trennt. Schliesslich wird gemäss Anspruch 5 als weitere mögliche Massnahme vorgeschlagen, dass am Ausgang (11) der Druckausgleichsleitung ein Permanentmagnet (9) angeordnet ist, welcher gegebenenfalls noch vorhandene ferromagnetische Teilchen (z.B. Magnetit im Falle von Wasserleitungen aus Eisen) die restlichen, die Druckausgleichsleitung (5) passierenden ferromagnetischen Teilchen anzieht und auffängt und diese dadurch vom Anker und den Polen des Magnetkreises fernhält.
Es sind Flüssigkeiten bekannt, welche bei gegenseitiger Berührung insbesondere in einem relativ engen Kanal, wie die oben beschriebene Druckausgleichsleitung (5), sich nicht vermischen, beispielsweise Wasser und flüssige chemische Verbindungen der Kohlenwasserstoffgruppe, wie Oele, speziell Paraffine und Silikone.

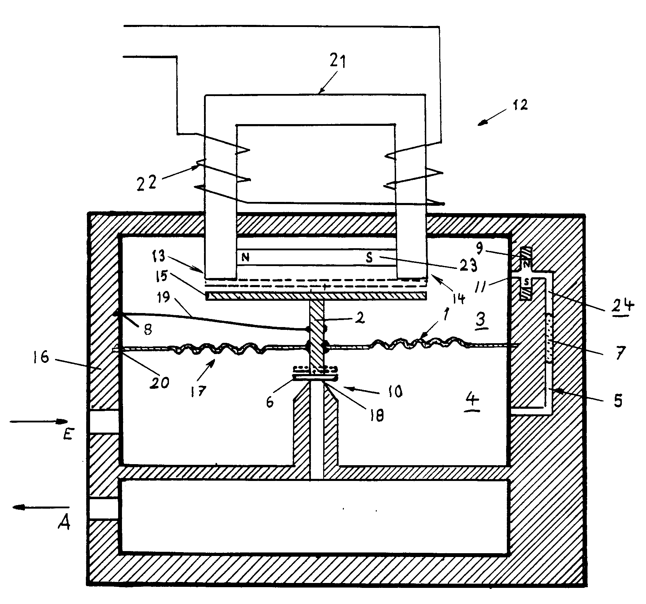

## Patentansprüche

1. Durch elektrische Impulse gesteuertes, bistabiles Auf-Zu-Ventil für Flüssigkeiten, mit einem eine Ventilklappe (6) betätigenden elektromagnetischen Steuermechanismus mit Magnetpolen (13,14) und einem beweglichem mit dem Steuermechanismus zusammenwirkenden Magnetanker (15), wobei der Magnetanker (15) und die Ventilklappe (6) mit einer elastischen Membran (1) mechanisch verbunden sind, **dadurch gekennzeichnet**, dass die Magnetpole (13,14) des Steuermechanismus und der mit diesem zusammenwirkende Magnetanker (15) in einer mit einem flüssigen oder gasförmigem Medium gefüllten Steuerekammer (3) angeordnet sind, welche durch die elastische Membran (1) von einer vom zu steuernden Flüssigkeitsstrom durchflossenen Ventilkammer (4) getrennt ist, und dass die Steuerkammer (3) und die Ventilkammer (4) durch eine Druckausgleichsleitung (5) verbunden sind.

2. Ventil nach Anspruch 1, **dadurch gekennzeichnet**, dass die Steuerkammer (3) mit einer Flüssigkeit gefüllt ist, welche derart beschaffen ist, dass sie sich im Temperaturbereich der in der Ventilskammer (4) befindlichen Flüssigkeit mit letzterer nicht vermischt.

3. Ventil nach Anspruch 1, **dadurch gekennzeichnet**, dass sich in der Steuerkammer (3) ein Gas, beispielsweise Luft befindet.

4. Ventil nach Ansprüchen 1 und 2, **dadurch gekennzeichnet**, dass sich in der Druckausgleichsleitung (5) ein Abschnitt einer Flüssigkeit (7) befindet, die derart beschaffen ist, dass sie sich mit den in der Steuer- und der Ventilkammer befindlichen Flüssigkeiten nicht vermischt.

5. Ventil nach Ansprüchen 1 oder 2, **dadurch gekennzeichnet**, dass die in der Steuer- und der Ventilkammer befindlichen Flüssigkeiten in der Druckausgleichsleitung (5) durch eine Gasblase getrennt sind.

6. Ventil nach einem der Ansprüche 1 bis 4, **dadurch gekennzeichnet**, dass im unmittelbaren Bereich des in die Steuerkammer (3) mündenden Abschnitts (11) der Druckausgleichsleitung (5) ein Permanentmagnet (9) angeordnet ist, welcher die in der Flüssigkeit der Ventilkammer (4) vorhandenen, gegebenenfalls die Druckausgleichsleitung (5) passierenden ferromagnetischen Teilchen anzieht und zurückhält.

## Claims

1. Bistable on-off valve for fluids, actuated by electric pulses, comprising a valve flap (6) actuated by an electromagnetic control mechanism with magnetic poles (13,14) and a movable armature (15) coacting with that control mechanism, whereof the armature (15) and the flap (6) beeing mechanically connected with an elastic diaphragm (1), characterised in that the magnetic poles (13,14) and the movable armature (15) coacting with said control mechanism are arranged in a control chamber (3) containing a liquid or gaseous medium, being separated by the diaphragm (1) from the valve chamber (4), the latter beeing passed by the fluid to be controlled and that the control chamber (3) and the valve chamber (4) are interconnected by a pressure equalizing line (5).

2. Valve as defined in claim 1, characterised in that the control chamber (3) is filled with a fluid which is composed such, that it is not mixing with the fluid passing the valve chamber (4), within the temperature range of the latter.

3. Valve as defined in claim 1, characterised in that the control chamber (3) contains a gaseous medium, for example air.

4. Valve as defined in claim 1 or 2, characterised in that the pressure equalizing line (5) contains a section of a fluid (7) composed such, that it is not mixing with the fluids contained in the control chamber and the valve chamber respectively.

5. Valve as defined in claims 1 or 2, characterised in that the fluids contained in the control chamber and in the valve chamber are separated in the pressure equalizing line (5) by an air buble.

6. Valve as defined in claims 1 to 4, characterised in that the pressure equalizing line (5) involves a permanent magnet (9) arranged within line (5) close to the entrance of line (5) to the chamber (3) in order to attrack and retain ferromagnetic parts contained in the fluid of the valve chamber (4) and possibly passing the pressure equalizing line (5).

## Revendications

1. Soupape bistable d'ouverture et de fermeture pour fluides, commandée par des impulsions électriques, avec un mécanisme électromagnétique de commande avec des pôles d'aimant (13,14) et une armature mobile (15) concourant avec le méchanisme de commande, actionnant un clapet (6), l'armature (15) d'une coté et le clapet (6) d'autre coté étant connectés avec un diaphragme élastique (1), caractérisée en ce que les pôles d'aimant (13,14) du mécha-nisme de commande et l'armature (15) sont disposés dans un espace de commande (3) contenant un fluide liquid ou gazeux, le diaphragme élastique (1) séparant l'espace de commande (3) de l'espace soupape (4), ce dernier étant traversé par le fluide à commander et que l'espace de commande (3) est connecté avec l'espace de soupape (4) par un conduit de raccordement (5) pour l'égalisation de pression.

2. Soupape selon la revendication 1, caractérisée en ce que l'espace de commande (3) est rempli d'un liquide composé tel qu'il ne se mélange pas avec le liquide contenu dans l'espace de soupape (4), dans l'écart de température de ce dernier.

3. Soupape selon la revendication 1, caractérisée en ce que l'espace de commande (3) contient un fluide gazeux, par exemple de l'air.

4. Soupape selon les revendications 1 et 2, caractérisée en ce que dans le conduit de raccordement (5) il y a une section de liquide (7) composé tel qu'il ne se mélange pas avec les liquides contenus dans les espaces de commande et de soupape.

5. Soupape selon les revendications 1 ou 2, caractérisée en ce que les liquides contenus dans les espaces de commande et de soupape sont séparés par une bulle de gaz contenue dans le conduit de raccordement (5).

6. Soupape selon une des revendications 1 à 4, caractérisée en ce que dans la zone immédiate de la section (11) du conduit de raccordement (5) aboutant dans l'espace de commande, un aimant permanent est placé qui attire et retient les particules ferromagnétiques contenues dans le liquide qui passe l'espace de soupape (4), le cas échéant passant le conduit de raccordement (5).
